# EUROPÄISCHE PATENTSCHRIFT

(11) **EP 0 774 333 B1**
(45) Veröffentlichungstag und Bekanntmachung des Hinweises auf die Patenterteilung: **31.01.2001**
(21) Anmeldenummer: 96118423.1
(22) Anmeldetag: 16.11.1996
(51) Int. Cl.: B29C 33/10

(54) **Reifenvulkanisationsform mit Entlüftung**
Tyre vulcanizing mould provided with venting means
Moule de vulcanisation de pneumatiques avec système d'évacuation d'air

(30) Priorität: 20.11.1995 DE 19543276
(43) Veröffentlichungstag der Anmeldung: 21.05.1997
(73) Patentinhaber: Continental Aktiengesellschaft, 30165 Hannover (DE)
(72) Erfinder: Heimbuchner, Klaus, 34477 Twistetal (DE); Noll, Arthur Friedrich, 34516 Voehl (DE); Pleger, Detlef, 34516 Voehl (DE); Holländer, Heinz-Jürgen, 34497 Korbach (DE); Köhler, Heinz, 35066 Frankenberg (DE)

(56) Entgegenhaltungen:
- GB-A- 922 788
- GB-A- 1 556 170
- US-A- 2 865 052
- US-A- 4 021 168
- US-A- 4 347 212
- US-A- 4 759 701
- PATENT ABSTRACTS OF JAPAN vol. 010, no. 207 (M-500), 19.Juli 1986 & JP 61 047216 A (BRIDGESTONE CORP), 7.März 1986,

## Beschreibung

Die Erfindung bezieht sich auf ein Entlüftungsventil zum Einsatz in eine Entlüftungsbohrung einer Vulkanisationsform. Ein solches gattungsgemäßes Ventil weist einen beweglichen Ventileinsatz mit einem Schaft und einem Teller auf, wobei der Ventileinsatz in die geschlossene Stellung drückbar ist durch Druck auf die Seite des Tellers, die der Kaverne der Vulkanisationsform, in die dieses Ventil einbaubar ist, zugewandt ist, und umgekehrt der Ventileinsatz durch eine Feder in die offene Stellung bewegbar ist, wenn kein Druck von der Kaverne her auf den Teller wirkt. Die Beweglichkeit des Ventileinsatzes ist durch einen am kavernenabgewandten Ende des Ventiles angeordneten Anschlag begrenzt, der die Bewegung des Ventileinsatzes in die Öffnungsstellung auf einen Weg kleiner 2 mm begrenzt.

Es ist bekannt, dass eine jede Reifenvulkanisationsform entlüftet werden muss, damit sich der Reifenrohling durch Aufblähen von innen her an die formgebenden Werkzeuge der Vulkanisationsform anlegt. Dabei treibt der Rohling radial außen Luft vor sich her; wo diese Luft nicht abfließen kann, wird sie komprimiert bis auf einen Druck knapp unter dem angewandten Blähdruck. Zwar führt die Druckanwendung zu einer Erhöhung des Luftlösevermögens im Kautschuk, jedoch ist selbst dann noch das Luftlösevermögen außerordentlich klein. Die Reste von Luft, die weder abgeführt wurden noch im Kautschuk in Lösung gegangen sind, bilden örtliche Polster zwischen der Innenkontur der Vulkanisationsform und der Außenkontur des Reifenrohlings.

Der an diesen Orten fehlende direkte Kontakt zwischen der Vulkanisationsform, nachfolgend nur kurz "Form" genannt, und dem Rohling führt nicht nur zu einer Eindellung des Rohlinges an einer solchen Stelle sondern darüberhinaus zu einer verringerten Heizung infolge des wesentlich geringeren Wärmeleitvermögens von Luft gegenüber dem Metall der Form; dies kann zu einer unzureichenden Schwefelvernetzung führen und ein Werkstoffversagen im Betrieb verursachen.

Alle Reifenhersteller verwenden deshalb große Aufmerksamkeit darauf, ihre Formen zu entlüften.

Laufflächenprofile von Reifen sind in der Regel sehr detailreich mit Längs- und Quernuten sowie zahlreichen, teils sogar gewundenen, Einschnitten, die verschiedene Positive, wie Klötze und Stege voneinander trennen. Pneumatisch gesehen unterteilen die in der Regel zahlreichen Vorsprünge der Form nach radial innen, die die späteren Reifennegative abformen, das abzuführende Luftvolumen in voneinander isolierte Kammern, von denen jede zumindest einen Entlüftungskanal benötigt. Deshalb haben - entsprechend ihrem Detailreichtum - Vulkanisationsformen für die Herstellung von Luftreifen eine Vielzahl zwischen 1.000 und 3.000 von Entlüftungsbohrungen.

Gemäß der ältesten und bis heute noch vorherrschenden Technik werden zur Entlüftung von Formen eine Vielzahl etwa senkrecht zur abzuformenden Oberfläche verlaufender dünner Bohrungen in den abformenden Werkzeugen angeordnet, die in Entlüftungskanäle der äußeren Bauteile der Form münden. Diese Bohrungen haben einen Durchmesser von etwa 0,7 bis 1,5 mm je nach erforderlicher Bohrtiefe und damit nach der Reifengröße. Eine typische PKW-Sommerreifen-Form verfügt über etwa 1.500 Entlüftungsbohrungen, eine typische PKW-Winterreifen-Form über etwa 2.500 Entlüftungsbohrungen.

Diese Löcher haben für die abzuführende Luft einen erfreulich geringen Strömungswiderstand; allerdings ist ihr Strömungswiderstand selbst für den zäheren Kautschuk noch so gering, dass nach dem Aufbau des Blähdruckes bis zur Erreichung einer ein weiteres Fließen verhindernden Vernetzung nennenswerte Mengen von Kautschuk in die Entlüftungsbohrungen herein fließen. In der Regel ist es möglich, durch Abstimmung von Vulkanisationsgeschwindigkeit (durch Temperaturverlauf, Beschleunigerdosierung, Schwefeldosierung), Durchmesser der Entlüftungslöcher und Rissfestigkeit der vulkanisierten borstenähnlichen Austriebe sicherzustellen, dass die Austriebe bei der Reifenentnahme aus der Form nicht vom Reifen abreißen; rissen sie ab, blieben sie in ihrem jeweiligen Entlüftungsloch stecken und würden die korrekte Entlüftung des nachfolgend in dieser Form zu vulkanisierenden Reifens vereiteln.

Es gibt, gerade im oberen Preissegment, viele Kunden, die das borsten- oder igelartige Erscheinungsbild der so entnommenen Reifen mit ihren vielen Austrieben nicht mögen. Vornehmlich deshalb werden in vielen Reifenserien die Austriebe vor der Auslieferung entfernt. Hierfür sind zahlreiche Techniken bekannt, von denen einige an ein Rasieren, andere an ein Hobeln und noch andere an ein Schleifen erinneren. Zwecks besonders ansprechender Schnittkanten ist auch eine Kälteversprödung der abzutrennenden Austriebe bekannt. - Alle diese Techniken verursachen aber erhebliche Kosten.

Deshalb besteht seit langem die Aufgabe, eine Vulkanisationsform zu schaffen, die ohne kostspielige nachträgliche Austriebentfernung zu austriebslosen Reifen führt. Zur Lösung dieser Aufgabe sind bereits mehrere Vorschläge bekannt geworden:

Aus dem US-Patent 3,377,662 vom April 1968 ist es bekannt, in jede der an sich bekannten Entlüftungsbohrungen einen im Querschnitt sternförmigen Stift einzusetzen, dessen äußerer Hüllkreis geringfügig größer ist als der Innendurchmesser der Entlüftungsbohrungen, sodass jeder Stift durch eine Presspassung in seiner Bohrung gehalten ist. Aus dem ehemals einen, relativ großen, Querschnitt pro Bohrung werden so mehrere, im Querschnitt wesentlich kleinere, Kanäle, wobei selbst die Summe der Querschnittflächen der so erzeugten Einzelkanäle etwa um den Faktor 10 unter der Querschnittfläche der so gedrosselten Entlüftungsbohrung liegt, die Einzelquerschnittflächen etwa um den Faktor 100.

Dieser Vorschlag geht davon aus, dass Bohrer eine bestimmte Schlankheit, also eine Länge im Verhältnis zum Durchmesser, nicht überschreiten dürfen, um nicht auszuknicken. Deshalb kann der Durchmesser einer Entlüftungsbohrung nicht so klein gewählt werden, wie er für die angestrebte Entlüftungsfunktion ausreichen würde. Der Kerngedanke dieser Schrift ist also, eine aus herstellungstechnischen Gründen zu weite Bohrung nachträglich auf einige sehr viel engere Kanäle zu drosseln. Von nahezu identischem Inhalt ist die EP-PS 0 518 899.

Auch der europäischen Patentanmeldung 0 311 550, publiziert im April 89, geht es um eine nachträgliche Verengung zunächst zu weiter Kanäle durch Einsatz je eines Stiftes. Abweichend von vorheriger Schrift verteilt diese Lösung den verbleibenden Strömungsquerschnitt einer Entlüftungsbohrung nicht auf viele kleine, auf einem Ring liegende Spalten, sondern ergibt einen zusammenhängenden, engen, kreisförmigen Spalt. Derweil das sternartige Außenprofil von Stiften gemäß vorheriger Schrift preiswert durch Ziehen eines Drahtes durch eine entsprechende Matritze erhältlich ist, erfordert die keilnabenartige Innenprofilierung der Entlüftungskanäle gemäß EP-PA 0 311 550 den Übergang vom Bohren auf das teurere Stoßen oder Fräsen.

Die EP-PA 0 591 745 schlägt vor, an bestimmten, den Reifen abformenden Stellen der Form offenporiges Material zu verwenden einer Porengröße unter 0,05 mm. Diese Porösität soll groß genug sein, um eine ausreichend schnelle Luftabfuhr zu ermöglichen und klein genug, um ein Eindringen von Kautschuk in die Poren mit anschließender Verstopfung zu vermeiden. Nach eigenen Erfahrungen sind jedoch nach zu wenigen vulkanisierten Reifen bereits so viele Poren verstopft, dass deren Reinigung nötig wäre; diese ist aber nahezu unmöglich.

Die im August 1991 publizierte EP-Patentanmeldung 0 440 040 lehrt, Formsegmente entlang solchen Linien in Teilsegmente aufzutrennen, die Orte mit Entlüftungsbedarf verbinden. Auch hier sollen die Entlüftungskanäle extrem schmal sein, sodass der dadurch erhöhte Strömungswiderstand für den Kautschuk nur einen sehr kleinen Einfließweg zulässt. Gegenüber dem zuvor genannten Stande der Technik erlaubt diese Maßnahme eine Reinigung der Entlüftungsspalte, wozu das zu reinigende Formsegment in seine Teilsegmente zerlegt wird. Allerdings sind solche Formen durch die hohe Anzahl von Passflächen, die zudem bei den meisten modernen Reifenprofilen nicht eben sondern entsprechend dem Querrillenverlauf des fertigen Reifens gewölbt sind, sehr teuer.

Aus der gegenüber zuvor genannter Entgegenhaltung älteren, nachveröffentlichten DE-OS 39 14 649 ist eine besondere Anordnung solcher Entlüftungsspalte, dort mit dem Bezugszeichen 18 angesprochen, bekannt und zwar unmittelbar am Fuße der Rippen (Spalte 2, Zeile 43).

Die gegenüber der EP-Patentanmeldung 0 440 040 prioritätsjüngere EP-Patentanmeldung 0 451 832 schafft ebenfalls Entlüftungsspalten durch puzzle-artige Feinunterteilung der Formsegmente. In diese Richtung weisen auch DE-OS 19 33 816 (siehe Anspruch 6), JP-A-76 91 423, JP-A-51 119 776 und die US-PS 4,691,431 und 4,708,609.

Es ist auch immer wieder vorgeschlagen worden, in der Reifenvulkanisierform vor dem Einprägen des Laufflächenprofiles ein Vacuum zu erzeugen. Hierfür könnte eine wesentlich kleinere Anzahl von Entlüftungskanälen genügen, bei ausreichender Zeiteinräumung zum Evakuieren sogar ein einziger; die einer solchen Form zu entnehmenden Reifen sind also im wesentlichen frei von Austrieben und es entsteht kein Reinigungsbedarf.

Nachteiligerweise ist aber angesichts der Größe und der zahlreichen Teilungsebenen von Vulkanisierformen für Reifen eine Unterdruckerzeugung unter 0,1 bar nur mit exorbitantem Aufwande möglich; bei 0,1 bar verbleiben aber noch Restluftmengen, die die Aufnahmefähigkeit des Kautschukes durch Lösung überschreiten; auf Entlüftungskanäle kann man dann aber immer noch nicht verzichten. - Dergleichen wird vorgeschlagen in den US-Patenten 4,573,894, 4,597,929, 4,881,881 und 5,283,022 sowie in der DE-OS 22 10 099 und der europäischen Patentanmeldung 0 468 154. Auch die EP-PA 0 414 630 knüpft hieran an und lehrt zudem zur Entnahme des fertig vulkanisierten Reifens das Gegenteil, also ein Einblasen von Gas in die Form durch die "Entlüftungs"kanäle. Letzteres - ohne Vakuumanwendung - ist vorbekannt aus US-PS 4,812,281.

Die deutschen Offenlegungsschriften 22 00 314 vom Juli 1973, 25 24 538 vom Dezember 1976 und 31 42 288 vom Mai 1983 offenbaren Vorrichtungen zur Herstellung austriebfreier Spritzgussteile. Ein einziger Entlüftungskanal ist konzentrisch zur Rotationsachse der Kavität angeordnet und mündet in einen Evakuator, der vor Einspritzbeginn der Polymermischung ein weitgehendes Vacuum in der Form erzeugt. Der Restluftdruck kann hierbei sehr klein sein, weil nur eine einzige Dichtfläche existiert, die zudem eine kurze Bogenlänge aufweist. Kurz nach Einspritzbeginn, also noch vor dem vollständigen Ausfüllen der Kavität mit der Polymermischung, verschließt ein Ventil mit kegelförmigem Ventilteller den Entlüftungskanal. Das Aufprallen der einströmenden Polymermischung auf die kavitätsseitige Fläche des Ventiltellers bewirkt direkt (DE-OS 22 00 314 und DE-OS 31 42 288) oder indirekt (DE-OS 25 24 538) mittels Verbiegung einer Platte durch einseitig angreifenden Förderdruck, die durch einen Verschiebemechanismus auf den Ventilteller übertragen wird, die Ventilschließung. Die sehr frühe Schließung des Ventiles gewährleistet, dass nichts von der Polymermischung in den Spalt zwischen Sitzfläche und kavitätsabgewandter Kegelfläche des Ventiltellers eindringt. Dies führt zur völligen Austriebsfreiheit und vermeidet von vorneherein ein Verkleben des Ventiles; deshalb reicht zur Ventilöffnung bei Entnahme des fertig vulkanisierten Teiles, insbesondere Gummidichtringes, eine schwache Wendelfeder aus. Auch eine Ventilreinigung ist unnötig, was erklärt, warum die in DE-OS 31 42 288 gezeigte Montagemöglichkeit des Ventileinsatzes mittels Einschnappen nicht mit der Möglichkeit des einfachen Ausschnappens kombiniert ist.

Bei dieser Entlüftungstechnik entweicht die in der Form noch vorhandene Restluftmenge ab dem - frühen - Schließzeitpunkt des Ventiles nicht mehr, sondern wird komprimiert, was aber gute Spritzgießformen wegen ihrer sehr kleinen Restluftmenge verkraften. Überdies fördern Extruder die Polymermischung mit Drücken zwischen 100 und 400 bar, meistens ca. 300 bar. Dadurch wird die extrem kleine Restluftmenge in Spritzgießformen so stark komprimiert, dass am Ende des Füllvorganges das Restluftvolumen nahezu auf Null geschrumpft ist und die Luftaufnahme im Kautschuk durch Lösung erhöht ist. Weil so kleine Restluftmengen in Reifenformen aber nicht möglich sind aufgrund der um ca. drei Zehnerpotenzen größeren Volumina und der vielen, teilweise aufeinander stoßenden Dichtflächen sehr großer Bogenlänge, und weil die Fülldrücke bei PKW- und Motorradreifen nur bei ca. 10 bar, bei schweren LKW-Reifen bei ca. 15 bar liegen, ist dieses austriebfreie Spritzgießen nicht auf die Herstellung von Luftreifen übertragbar.

Das im August 1982 publizierte US-PS 4,347,212 zeigt genauso wie US-PS 4,492,554 eine Reifenvulkanisierform, deren die Bereiche der Seitenwände entlüftende Kanäle durch Ventile verschließbar sind, die kavernenseitig einen Teller aufweisen und durch das Herannahen von Kautschuk geschlossen werden. Der Reinigungsaufwand für solche Ventile ist vom selben Erfinder in dem im Juli 1988 veröffentlichten US-PS 4,759,701 als nachteilig hoch bezeichnet worden. Letzteres zeigt ein Entlüftungsventil für den Seitenwandbereich von Reifenvulkanisierformen mit einem solcherart invertierten Dichtsystem, dass eine Bewegung des Ventileinsatzes entsprechend dem Drucke einer Drahtwendelfeder [engl.: coiled wire spring; frz.: ressort helicoide en fil metallique] zur Kaverne hin zur Verschließung und eine Bewegung weg von der Kaverne zur Öffnung führt.

US-PS 4,351,789 offenbarte im September 1982 ebenfalls Ventile zur Entlüftung der Seitenwandbereiche von Reifenvulkanisierformen. Die dortige Drahtwendelfeder ist in der Schließstellung auseinandergezogen.

US-PS 4,021,168 veröffentlichte im Mai 1977 eine durch Ventile gesteuerte Entlüftung auch im Laufflächenbereich einer Reifenvulkanisierform. Hierbei sind die Funktionen der Ventiltellerführung - üblicherweise ein gleitend geführter Schaft - und der Ventilfederung nicht voneinander getrennt. Zu erwarten ist eine kleine Teileanzahl und darum billige Anschaffung, leichte Demontierbarkeit und darum leichte Reinigbarkeit und geringer Platzbedarf aber auch, dass die Parallelführung des Ventiltellers so ungenau ist, dass schon wenige Vulkanisationen so viel Kautschuk in die Entlüftungskanäle eindringen lassen, dass diese gereinigt werden müssen. Einen völligen Verzicht auf eine Parallelführung des Ventiltellers zeigt das ältere, im April 1963 veröffentlichte britische Patent 922 788, um neben einer Hin- und Herschiebbarkeit auch eine Schwenkbarkeit zu erreichen. Auch eine das Ventil öffnende Feder fehlt dort.

Wie vorgenanntes Patent lehrt auch das im November 1979 publizierte GB-PS 1 556 170 die Verwendung eines Anschlages zur Begrenzung der Öffnungsbewegung von Entlüftungsventilen.

Die japanische Patentanmeldung 61 047 216 lehrt ein Entlüftungsventil auf dessen kavernenzugewandter Seite anstelle eines Ventiltellers ein flacher, etwa zylindrischer Elastomerkörper mit einer feinen Entlüftungsbohrung (31) angeordnet ist. Diese soll durch herannahenden Kautschuk so komprimiert werden, dass nur noch Luft entweicht, aber kein Kautschuk eindringt.

Neben der bereits genannten DE-OS 31 42 288 erscheint als der der Erfindung am nächsten kommende Stand der Technik JP-A-22 14 616, bisweilen auch zitiert als JP 90-302 309/40. Diese japanische Schrift lehrt bereits, den Federdruck einer als Drahtwendelfeder ausgeführten Rückstellfeder direkt in den Ventilteller einzuleiten.

Den Überblick über den Stand der Technik abschließend ist festzustellen, dass zwar einige der zuvor zitierten Vorschläge kleine Verbesserungen gebracht haben, aber noch kein rundum befriedigendes Entlüftungsventil für Reifenvulkanisierformen angegeben wurde, was sich am deutlichsten darin zeigt, dass auch heute noch die meisten Reifen nach der Entnahme aus der Form als störend empfundene Austriebe zeigen.

Aufgabe der Erfindung ist es darum, ein Entlüftungsventil zu schaffen, das die Fertigung praktisch austriebfreier Reifen ermöglicht ohne spanende Nachbearbeitung. Ein solches Ventil soll preiswert und leicht zu warten sein.

Die Aufgabe wird erfindungsgemäß durch ein Entlüftungsventil gemäß Anspruch 1 gelöst. Ausgehend von den im ersten Absatz dieser Beschreibung genannten Merkmalen ist es dadurch gekennzeichnet, dass der Anschlag (der gattungsgemäß die Beweglichkeit des Ventileinsatzes begrenzt) zwecks Demontierbarkeit des Ventileinsatzes als ein mit Spiel ausgeführter Schnappverschluss zwischen dem Ventilschaft einerseits und dem Ventilgehäuse bzw. - nämlich bei gehäuseloser Anordnung des Ventileinsatzes direkt im jeweiligen Segment einer Vulkanisationsform - dem jeweiligen Segment der Vukanisationsform andererseits ausgeführt ist.

Nach Einbau solcher Ventile in eine Vulkanisierform, wird jedes der Ventile in die geschlossene Stellung gedrückt beim Auftreffen der Polymermischung während des Prägens des Rohlinges des Reifens, der vorzugsweise ein Luftreifen ist, umgekehrt aber wird durch eine schwache Feder jedes der Ventile in die offene Stellung gedrückt bei Entnahme des fertigen Reifens.

Während bei den über ein einziges, etwa doppelt bis dreifach so großes Ventil evacuierten Spritzgießformen, zum Beispiel gemäß DE-OS 31 42 288, das Ventil zu früh schließt, schließen bei der hier vorgestellten Lösung zur vorzugsweise evacuatorlosen Entlüftung von Reifenvulkanisationsformen die vielen winzigen Ventile wesentlich zeitgenauer - insbesondere nicht zu früh, was aus Sicherheitsgründen überaus wichtig ist - weil sie jeweils am Ende eines Polymerströmungszweiges angeordnet sind und nicht in der Nähe des Anfanges. Dabei wird hingenommen, dass für eine 100-prozentige Austriebsvermeidung einige der Ventile eine Nuance zu spät schließen. Die so hingenommenen kreisringartigen Austriebe haben bei den bisherigen Versuchen einen mittleren Ringdurchmesser von 2,8 mm, eine Ringbreite von ca. 0,3 mm und eine Höhe von ca. 0,25 mm; die Austriebe sind damit so klein, dass zumindest in den meisten Marktsegmenten eine nachträgliche Austriebentfernung entbehrlich ist.

Hieraus resultieren Einsparungen an Arbeitszeit, Platzbedarf und teuer zu entsorgender Abfallmenge von Gummi; diese Einsparungen übertreffen die Kosten des erhöhten Kapitalbedarfes wegen der Ventilkosten. Insbesondere die Einsparung an Arbeitszeit überraschte interne Kritiker der Erfindung, die zunächst befürchteten, dass die an den alten Schleifmaschinen eingesparte Arbeitszeit mehr als kompensiert würde durch den Wartungsaufwand für die in geradezu irrwitzig hoher Anzahl verwendeten Ventile. Die gegenüber den bisher vorherrschenden, nagelähnlichen Austrieben durch die Erfindung wesentlich unscheinbarer gewordenen Austriebe sehen denen ähnlich, die gemäß der EP-PA 0 311 550 am Reifen zurückbleiben.

Um die Sauberkeit der beiden zusammenwirkenden, vorzugsweise kegeligen, Flächen am Ventilsitz und -teller noch weiter zu erhöhen, ist es möglich diese Flächen anti-adhesiv zu beschichten; als Antiadhesivum empfehlen sich beispielsweise - wie an sich aus der DE-OS 39 03 899 und der EP-PA 0 228 652 bekannt - Polytetraflourethylen oder Polydimethylsiloxan.

Zur rationellen Fertigung erfindungsgemäßer Vulkanisationsformen und zwecks einfachen Ventilaustausches, falls mal ein Ventil versagen sollte, empfiehlt es sich, dass jedes Ventil ein eigenes, vorzugsweise zylinderförmiges, Gehäuse aufweist, gegenüber dem dem alle beweglichen Bauteile des Ventiles unverlierbar gehalten sind. Mit "unverlierbar" ist in diesem Zusammenhange gemeint, dass keine Einzelteile beim Versand vom Ventilhersteller oder beim vorgesehenen Ein- oder Ausschrauben verloren gehen können; das besagt nicht, dass das Ventil nicht mehr zerlegbar sein dürfte. Zumindest in dem noch laufenden Erprobungsstadium hat es sich bewährt, dass der Ventilteller zur regelmäßigen Kontrolle leicht demontiert werden kann über einen erfindungsgemäßen Schnappverschluss.

Vorzugsweise weisen die Ventilgehäuse (12) einen Außendurchmesser zwischen 2,0 und 6,0, für PKW-Reifen weiter bevorzugt zwischen 2,0 und 4,5 mm, für schwere LKW weiter bevorzugt zwischen 3,0 und 6,0 mm auf.

Wegen der Seltenheit von Demontagen reicht zur Befestigung der Ventile in den Formsegmenten je eine Pressung anstelle einer Gewindepaarung; hierzu sollte im ausgebauten Zustande des Ventiles der Außendurchmesser des Ventilgehäuses größer sein als der Innendurchmesser der zugehörigen Entlüftungsbohrung im Formsegment. Bei einem Gehäuseaußendurchmesser von 3,5 mm sollte das Übermaß zur Bohrung 50 bis 150 um betragen, bei größerem Gehäusedurchmesser entsprechend mehr und bei kleinerem Gehäusedurchmesser weniger. Diese Übermaßangaben beziehen sich auf die Werkstoffpaarung Stahl für die Ventilgehäuse und Aluminium für die Segmente mit den aufnehmenden Bohrungen; natürlich müssen bei steiferer Werkstoffpaarung, z. B. Stahl/Stahl, die Übermaße entsprechend kleiner sein.

Erfindungsgemäß soll jedes Ventil der Vulkanisierform auf der kavernenabgewandten Seite des Ventilschaftes einen Anschlag haben, der die Öffnungsbewegung des Ventileinsatzes begrenzt und zwar bevorzugt für Ventile in PKW-Reifenformen auf 0,3 bis 1,2 mm und für Formen für schwere LKW-Reifen auf 0,5 bis 2,0 mm. Das Maß, auf das die Ventilöffnungsbewegung begrenzt ist, wird auch als Ventilhub bezeichnet. Mittels dieser Wegbegrenzung kann - im Zusammenwirken mit einer spannungsfreien Federlänge größer als der Einbaulänge der Feder in der weitest möglich geöffenten Stellung - erreicht werden, dass die Feder an ihren Krafteinleitungsflächen immer unter Zug oder Druck steht, was ein Federklappern, wie es auftreten würde bei einer spielbehafteten Federbefestigung, einfach und wirkungsvoll vermeidet. Überdies würde bei zu großem Ventilschließweg der Ventilverschluss zu verzögert eintreten und einen zu großen Austrieb zwischen die zusammenwirkenden, vorzugsweise kegelstumpfförmigen Dichtflächen bewirken.

Der Kern der Erfindung ist, dass der Ventileinsatz trotz der Begrenzung der Ventilöffnungsbewegung leicht demontierbar ist. Hierzu ist die Wegbegrenzung durch einen Spiel aufweisenden Schnappverschluss zwischen dem Ventilschaft und dem Ventilgehäuse bzw. dem jeweiligen Formsegment realisiert. So sind alle Ventileinsätze ohne Lösen vieler Verschraubungen zu demontieren; der Schnappverschluss jedes Ventileinsatzes sollte so gestaltet sein, dass ein kräftiges Herausziehen in Richtung der Kaverne zur Demontage und ein kräftiges Hereindrücken zur Montage genügt. Nähere Details finden sich in den Ausführungsbeispielen und den Ansprüchen 2 bis 12.

Zur Erläuterung der Erfindung werden nachfolgend einige Ausführungsbeispiele anhand von Figuren beschrieben. Es zeigt:
- Fig. 1a: im Längsschnitt die linke Hälfte eines Formsegmentes aus dem den Laufflächenbereich des Reifens abformenden Bereich mit einem Ventil in jeder Entlüftungsbohrung, und zwar ohne anliegenden Rohling,
- Fig. 1b: im Längsschnitt die gleiche Hälfte des Formsegmentes, jedoch mit einem anliegenden Rohling, der alle Entlüftungsventile in die Schließstellung führt,
- Fig. 2: in gleicher Schnittebene im Maßstab 20:1 ein einzelnes Entlüftungsventil mit einer Begrenzung des Ventilöffnungsweges durch ein definiertes Spiel in einem Schnappverschluss, zu dem eine als seperates Bauteil einzulegende Biegefeder gehört,
- Fig. 3: im gleichen Maßstab in der Draufsicht in ausgebautem Zustande die in Figur 2 eingebaute Biegefeder
- Fig. 4: in analoger Darstellungsweise eine andere Ausführung der in Figur 2 einbaubaren Biegefeder und
- Fig. 5: in analoger Darstellung zur Figur 2 ein einzelnes Entlüftungsventil mit einer Begrenzung des Ventilöffnungsweges durch ein definiertes Spiel in einem Schnappverschluss, wobei hier jedoch die für einen Schnappverschluss nötige Einfederung nicht als Biegung einer seperaten Biegefeder sondern des unteren geschlitzten Endes des Ventilschaftes erreicht wird.

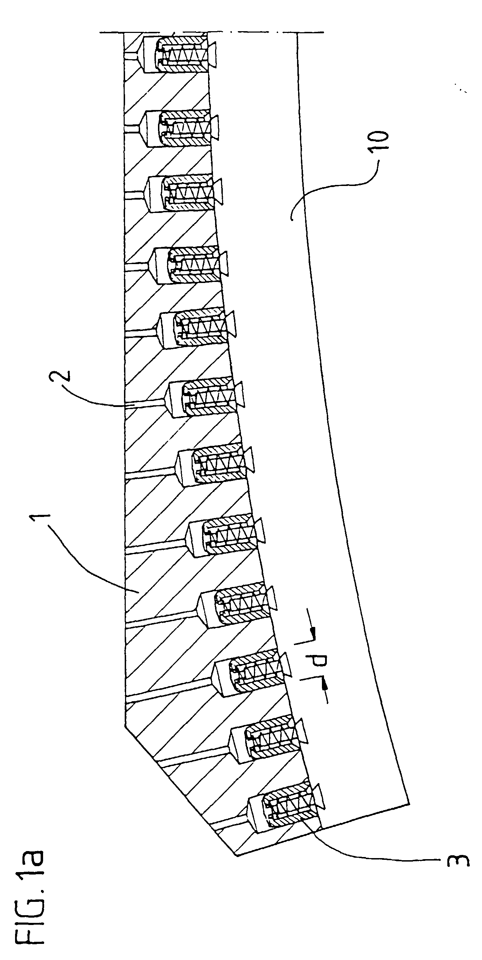

Figur 1a zeigt im Längsschnitt die linke Hälfte eines Formsegmentes 10 einer erfindungsgemäßen Vulkanisierform 1, wie sie gemäß Anspruch 16 bevorzugt ist; die Vulkanisierform 1 ist in diesem Beispiel wie üblich - für die Erfindung aber nicht erforderlich - im Laufflächenbereich radial geteilt, die Segmente 10 sind also radial beweglich. Dieses Segment 10 stammt aus dem den Laufflächenbereich des Reifens abformenden Bereich. Üblicherweise weisen radial geteilte Formen 7 bis 13 Segmente 10 im Laufflächenbereich auf, in PKW-Reifenformen meistens 7 oder 9, in Leicht-LKW-Reifenformen meistens 9 oder 11 und in Schwer-LKW-Reifenformen meistens 11 oder 13.

Abweichend von der späteren Funktionsstellung des fertigen Reifens mit etwa horizontaler Stellung der Rotationsachse werden Vulkanisationsformen in der Regel in flacher Anordnung betrieben, also mit senkrechter Stellung der Rotationsachse; so sind die Rohlinge besser einlegbar und die vulkanisierten Reifen leichter zu entformen. Die beiden Seitenteile der Form heißen dementsprechend Formober- und Formunterseite.

Entlüftungsbedarf besteht sowohl für die radial beweglichen Segmente 10 wie für die beiden hier nicht dargestellten Seitenteile; die Anzahl der benötigten Entlüftungsöffnungen 2 pro Fläche ist jedoch in den Seitenteilen kleiner als in den Segmenten 10, weil dort die abzuformende Gestalt nicht so kompliziert ist. Vorzugsweise erfolgt die Entlüftung in den axial beweglichen Seitenteilen 10 über ebensolche Ventile 3 wie in den radial beweglichen Segmenten 10.

Weil ausser der geringeren Anzahl der Entlüftungsöffnungen 2 keine Unterschiede zwischen der Entlüftung der radial beweglichen Segmente 10 und der axial beweglichen Seitenteile 10 bestehen, gilt das Bezugszeichen 10 für beide Segmentarten.

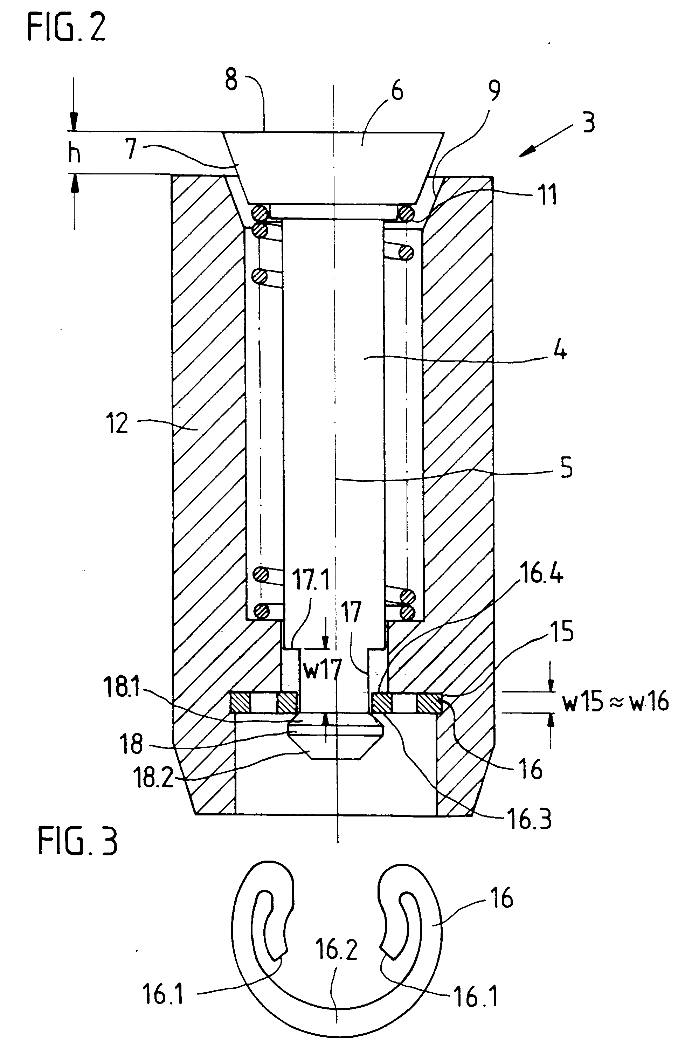

Wesentlich ist, dass in jeder Entlüftungsbohrung 2 ein Ventil 3 angeordnet ist. Das Formsegment ist in Fig. 1a dargestellt ohne anliegenden Rohling; infolgedessen sind alle Entlüftungsventile 3 im Zusammenspiel mit je einer schwachen Druckfeder 11, wie sie in der größeren Figur 2 deutlicher zu erkennen ist, geöffnet. Dabei ragen die Ventilteller 6, wie auch in Figur 2 erkennbar, in die Kaverne herein. Gemäß Anspruch 14 sind Druckfedern gegenüber Zugfedern bevorzugt.

Die Rückholfeder zur Erreichung der Öffnungsstellung sollte so schwach wie möglich und so stark - unter Berücksichtigung von Gewicht, Reibung und Fertigungstoleranzen - wie nötig sein; um die Öffnungsstellung sicher zu erreichen, reicht es nach den bisherigen Versuchen aus, wenn die Vorspannung (genauer: die Vorstauchung) das 1,5-fache aus der Summe des Eigengewichtes des Ventileinsatzes und dem halben Federeigengewicht beträgt.

In an sich bekannter Weise ist der Rohling eines Reifens 14 in eine solche in Fig. 1a gezeigte Form 1 mit geöffenten Ventilen 3 und somit offenen Entlüftungskanälen 2 einzulegen.

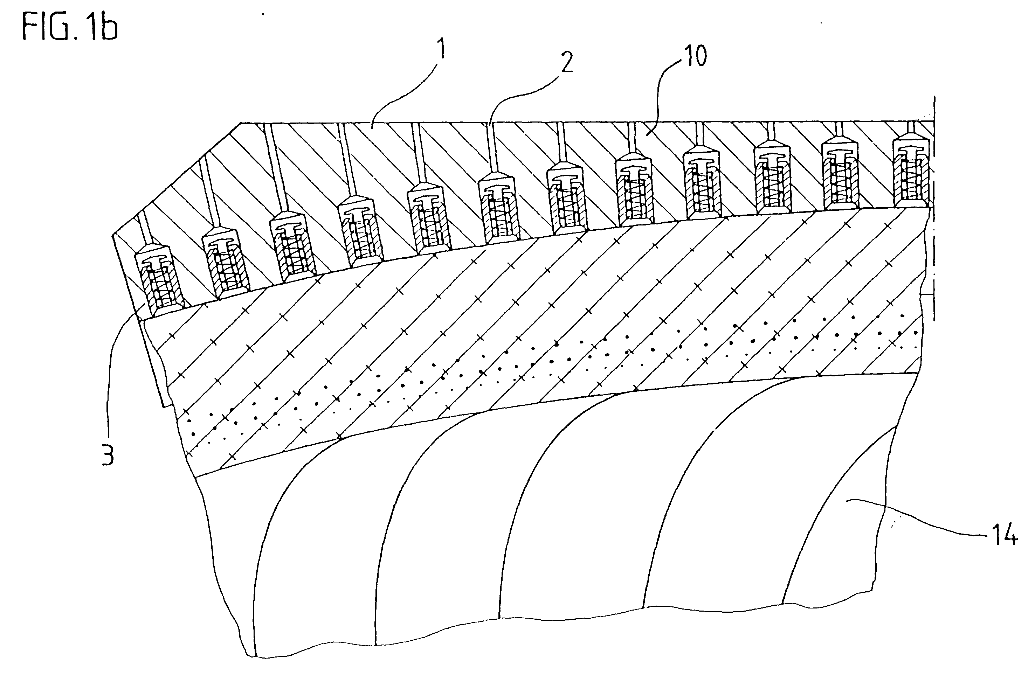

Figur 1b zeigt in analoger Darstellungsweise zur Figur la den Moment, wo - gegen Ende des "Resterhebens" - der Rohling des zu prägenden und zu vulkanisierenden Reifens 14 gerade in den Rillengründen der Form 1, die die erhabenden Stellen des entstehenden Laufflächenprofiles abformen und wo die meisten Entlüftungskanäle 2 kavernenseitig münden, zur Anlage kommt. Durch dieses Anlegen drückt der schon eine kleine Gestaltfestigkeit aufweisende Kautschuk die Ventile 3 gegen den nur schwachen Widerstand der jeweiligen Druckfeder in die hier gezeigte geschlossene Stellung.

Unter "Resterheben" wird in der Reifenfachsprache der kleine Rest der gesamten Erhebung oder Bombage verstanden, der innerhalb der Vulkanisationsform durch Blähung erreicht wird und durch den die Profilformgebung erreicht oder - bei sehr tiefen Profilen und/oder sehr zugsteifen Bewehrungen - zumindest vollendet wird.

Figur 2 zeigt in gleicher Schnittebene wie Figur 1 im Maßstab 20:1 ein einzelnes Entlüftungsventil 3 mit einem Ventileinsatz 4. Der Ventileinsatz 4 umfasst zumindest einen Ventilteller 6 und einen Ventilschaft 5. An einem Absatze des Ventiltellers 6 ist die Feder 11 zentriert.

Der Ventilteller 6 weist eine an die Kaverne der Form angepasste und demnach im wesentlichen plane Stirnfläche 8 auf. An diese legt sich der Reifenrohling beim Resterheben an. Der Ventilteller 6 ist im übrigen als Kegelstumpf 7 gestaltet passend im Durchmesser und im Kegelwinkel an die innenkegelige Fläche 9. Der Kegelwinkel zur strichpunktierten Längsachse des Ventileinsatzes sollte zwischen 15° und 60° liegen; gut bewährt hat sich der hier gezeigte Winkel von 22°.

Zwecks besserer Logistik in der Formenfertigung, z. B. zwecks Outsourcen der Ventilherstellung an einen Ventilhersteller, empfiehlt es sich, gemäß Anspruch 15 und wie hier gezeigt jeden Ventileinsatz 4 in einem seperaten, im Wesentlichen zylinderförmigen Gehäuse 12 anzuordnen. Zusammen mit der Druckfeder 11 und dem mit einer Biegefeder 16 als Anschlag zusammenwirkenden Bund 18 ergibt sich so eine Baueinheit, die alle Einzelteile des Ventiles 3 unverlierbar zusammenfasst; solche Ventile 3 kann der Formenbauer komplett vormontiert vom Ventilhersteller beziehen und in entsprechende Entlüftungsbohrungen von der Kaverne her einsetzen. Das Einsetzen erfolgt durch Einschlagen in eine enge Bohrung zur Erreichung einer Presspassung. Zur Erleichterung des Einschlagens ist das kavernenabgewandte Ende des Gehäuses 12 verjüngt.

Die Feder 11 ist gemäß Anspruch 13 eine Drahtwendelfeder und hat etwa zehn freie Windungen und je eine auf Block anliegende Windung an beiden Enden; bei steilerer Wicklung der Feder könnte bei jedem Auf- und Zugehen eine kleine Verdrehung des Ventileinsatzes um die strichpunktierte Längsachse zu erreichen sein. Dies fördert eine über dem Ventiltellerumfang besonders gleichmäßige Schließwirkung.

Soll abweichend von Figur 2 das Ventil 3 gehäuselos sein, so ist die innenkegelige Fläche 9 direkt an entsprechender Stelle des Formsegmentes einzubohren oder einzufräsen.

Der Ventilhub ist durch ein definiertes Spiel in einem Schnappverschluss begrenzt, zu dem eine als seperates Bauteil einzulegende Biegefeder 16 gehört. In der weitestmöglich geöffneten Stellung, die hier gezeigt ist, schlägt der Ventilschaft 5 mit der kavernenzugewandten Kegelstumpffäche 18.1 des Bundes 18, der am kavernenabgewandten Ende des Ventilschaftes 5 angeordnet ist, an die kavernenabgewandte Stirnfläche 16.3 der nach nach innenweisenden Schenkel 16.1 der Biegefeder 16.

Figur 3 zeigt diese Biegefeder 16 einzeln im gleichen Maßstabe in Draufsicht mit einem äußeren C-förmigen Teil 16.2, der so weit zusammenbiegbar ist, dass die Feder 16 von der kavernenabgewandten Seite her, also in Figur 3 von unten her, in den Schacht des Gehäuses einführbar ist zum Einschnappen in der Nut 15, die auf der Innenseite des Ventilgehäuses 12 bzw. - bei gehäuseloser Ausführung - in der Bohrung im Segment in einer Ebene senkrecht zur Längsachse des Ventiles 3 angeordnet ist. Die Biegefeder 16 hat nach innen weisende, elastisch biegsame Schenkel 16.1, die so bemessen sind, dass sie nach ihrer Ausfederung in die in Figur 3 gezeigte Nut 17 des Ventilschaftes 5 eingreifen. Nach Anlegen der kavernenzugewandten Fläche 18.1 des Bundes 18 an die kavernenabgewandte Fläche 16.3 der Feder 16 tritt so ein Widerstand gegen weiteres Herausziehen des Ventileinsatzes 4 auf; vorzugsweise sollten andererseits die Schenkel 16.1 so weit stehen, dass sich der Ventileinsatz 4 zwischen den Anschlägen 18.1 und 17.1 klemmfrei bewegen kann längs seiner strichpunktierten Längsachse.

Diese Schenkel 16.1 werden, wie Figur 2 zu entnehmen, beim Montieren des Ventilschaftes 5 von der Kaverne her gespreizt mittels einer vorauseilenden, also am kavernenabgewandten Ende angeordneten, konischen Fläche 18.2, die zu einer bundartigen Verdickung 18 des Ventilschaftes 5 am kavernenabgewandten Ende des Ventilschaftes 5 gehört. Nach Überwindung des dicksten Bereiches des Bundes 18 verengen sich die Schenkel 16.1 - auf der invers orientierten konischen Fläche 18.1 abgleitend - wieder so weit, dass der Ventilschaft 5 nur mit großer Kraft in Richtung der Kaverne (insbesondere mit einer größeren Kraft als der der Feder 11) in umgekehrter Richtung wieder heraus gezogen werden könnte. Um die Feder 16 stärker gegen ein Herausdrücken aus der Nut 15 bei Montage des Ventileinsatzes 4 zu sichern, kann von der kavernenabgewandten Seite her eine Hülse bis zur Feder eingepresst oder -geschraubt werden.

Die nach innen weisenden Schenkel 16.1 greifen in eine Nut 17 des Ventilschaftes 5 ein, die (17) zur kavernenabgewandten Seite hin durch die konische Fläche 18.1 und zur kavernenzugewandten Seite hin durch die vorzugsweise plane Fläche 17.1 begrenzt ist. Die Nutweite w17 der Nut 17 ist um einen Betrag größer als die Federweite 16, der etwas größer ist als der Ventilhub h, sodass in der geschlossenen Stellung des Ventiles 3 die der Schließbewegung folgende Nutstirnfläche 17.1 nicht bis zur kavernenzugewandten Stirnfläche 16.4 der Biegefeder 16 vordringt, wodurch eine Überbestimmung der Wegbegrenzung des Ventileinsatzes 4 vermieden und somit sattes Einführen der außenkonischen Fläche 7 des Ventiltellers 6 in die innenkonische Fläche 9 möglich ist, was ein perfektes Schließen des Ventiles 3 und Versatzfreiheit zwischen der Stirnfläche 8 des Ventiltellers 6 und der umgebenden Kavernenoberfläche bewirkt. Dies könnte auch bei kleinerer Nutweite w17 erreicht werden, wenn die Nutweite w15 dann entsprechend größer wäre, also: w17 + w15 - 2w16 > h.
Allerdings müsste dann auch der Außenteil 16.2 gegenüber dem Gehäuse 12 verschieblich sein, was aber zu einer Spieladdition auch in der Radialrichtung des Ventiles und zu einer Neigung zum Verkanten mit entsprechend streuenden Reibungsbeiwerten führt. Deshalb ist vorzugsweise w16 nur so geringfügig kleiner als w15, dass das zum Einsetzen nötige Spiel von ca. 20 um erreicht ist. Obige Forderung vereinfacht sich dann zu: w17 - w16 > h.

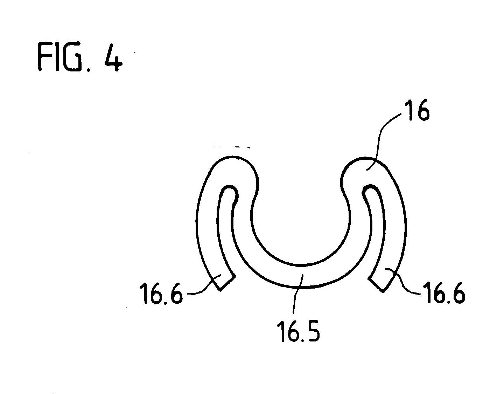

Figur 4 zeigt in analoger Darstellungsweise zu Figur 3 eine solche Variante der Biegefeder 16, bei der an den C-förmigen Teil, hier 16.5, nicht nach innen hin sondern nach außen hin Schenkel anschließen, die hier mit 16.6 bezeichnet sind. Die Schenkel 16.6 sollen in die Gehäusenut 15 eingreifen und der C-förmige Teil 16.5 in die Nut 17 des Ventilschaftes 5.

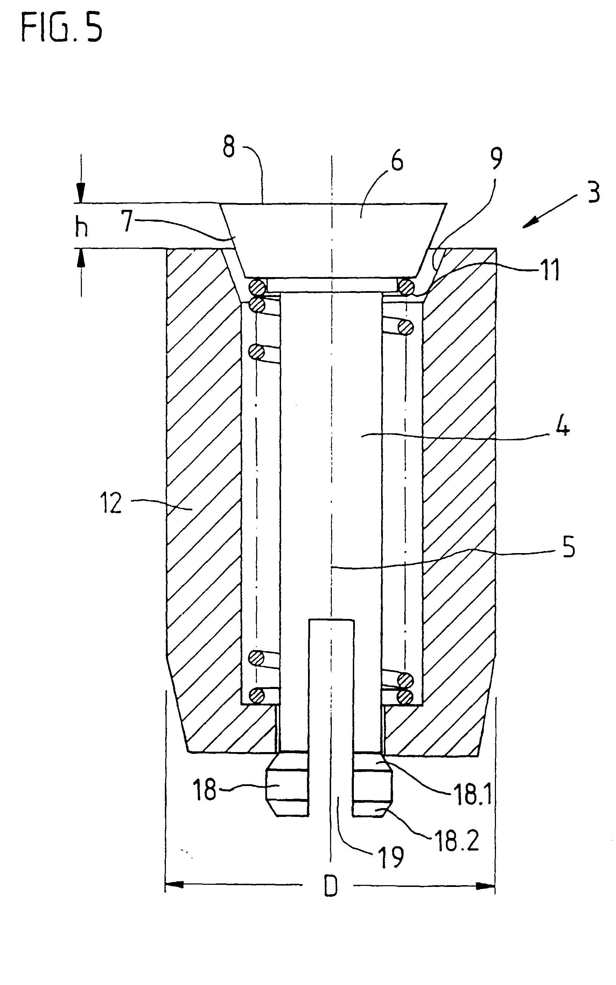

Figur 5 zeigt in analoger Darstellung zur Figur 2 ein einzelnes Entlüftungsventil 3 mit einer Begrenzung des Ventilöffnungsweges durch ein definiertes Spiel in einem Schnappverschluss. Auch hier wird die für einen Schnappverschluss nötige Einfederung als Biegung erreicht, aber nicht als Biegung einer seperaten Biegefeder sondern als Biegung des kavernenabgewandten, auf der Zeichnung unten erscheinenden, geschlitzten Endes des Ventilschaftes 5. Zur Kostenersparnis ist hier die Schlitzung durch nur einen Schlitz 19 erreicht. Dazu muss der Schlitz 19 wie gezeigt ziemlich weit sein, um nicht nur in der gezeigten Längsschnittebene einen genügenden Einfederweg der beiden stehen bleibenden Zungen aufeinander zu beim Montieren und Demontieren durch die kavernenabgewandte Öffnung 12.1 des Gehäuses 12 hindurch zu ermöglichen sondern auch in der dazu rechtwinkeligen weiteren Längsschnittebene durch das Ventil 3. (Letztgenannte Schnittebene wäre für die gesamte Form 1 als eine Querschnittebene zu bezeichnen.) Es wäre aber auch eine schmalere Schlitzausführung möglich, wenn der Bund 18 in Schlitznähe nivelliert würde, also weniger hervorragte aus der übrigen Oberfläche des Schaftes 5, oder wenn statt des einen Schlitzes 19 zwei sich kreuzende Schlitze am kavernenabgewandten Ende des Schaftes 5 angeordnet würden.

Der Bund 18 am kavernenabgewandten Ende des Ventilschaftes 5 hat eine kavernenzugewandte Begrenzungsfläche 18.1. Sie dient als Anschlagfläche zur Begrenzung der Ventileröffnung und ist so plaziert, dass sie in der gewünschten Öffnungsstellung - der bei einem Ventiltellerdurchmesser von etwa 2,8 mm und einem Kegelwinkel zur Längsachse von 22° ein Ventilhub von etwa 0,5 mm entsprechen sollte, wie hier gezeigt - an die kavernenabgewandte Fläche des Gehäuses 12 - oder einer äquivalenten Fläche bei gehäuseloser Ausführung - anschlägt. Durch dieses Anschlagen ist der Öffnungsweg begrenzt. Die umgekehrte Bewegung, die Schließbewegung, wird in keiner Weise durch den Bund 18 begrenzt sondern allein durch das Auftreffen der außenkegeligen Fläche 7 des Ventiltellers 6 auf die innenkegelige Fläche 9.

Zur Demontage eines solchen Ventileinsatzes 4 reicht infolge der gezeigten und bevorzugten konischen Ausführung der Anschlagfläche 18.1 ein kräftiges Ziehen am Ventilteller 6 in Richtung der Kaverne; ansonsten müssten mit der anderen Hand die stehenbleibenden Zungen des Ventilschaftes von Hand elastisch so weit zusammengebogen werden, dass sie die Öffnung 12.1 des Gehäuses 12 passieren können.

Zur Montage ist analog eine konische Ausbildung auch der anderen Begrenzungsfläche 18.2 des Bundes 18 zweckmäßig; dann reicht ein kräftiges Hereindrücken.

Die Tiefe des Schlitzes 19 bzw. der Schlitze am kavernenabgewandten Ende des Schaftes 5 ist klein genug, um im Zusammenspiel mit der so aufrecht erhaltenen Zungensteifigkeit einen ausreichenden Widerstand gegen unabsichliche Entfernung des Ventileinsatzes zu erhalten, andererseits groß genug, um die Zungen so biegeweich zu machen, dass eine Demontage erträglich leicht vonstatten geht.

Die detaillierten Ausführungsbeispiele sollen dem Fachmann umfangreiche Kenntnis von der Erfindung geben; der Schutzumfang wird aber durch diese Details aber nicht eingeschränkt. Kern der Erfindung ist allein, in jede der Hunderte von Entlüftungsbohrungen einer Reifenvulkanisationsform je ein Ventil einzusetzen, wobei jedes Ventil durch das Herannahen der Rohlingsoberfläche geschlossen wird und beim Entformen wieder geöffnet wird.

Folgende Bezugszeichenliste ist Bestandteil der Beschreibung:

### Bezugszeichenliste:

- 1: Vulkanisierform
- 2: Entlüftungsbohrungen in 1
- 3: Ventil, einzusetzen in 2
- 4: Ventileinsatz von 3
- 5: Schaft von 4
- 6: Teller am kavernenzugewandten Ende von 4
- 7: Kegelstumpf an der kavernenabgewandten Seite von 6
- 8: im wesentlichen plane Fläche an der kavernenzugewandten Seite von 6
- 9: innenkegelige Fläche in 10 bzw. 12 passend zu 7
- 10: Segment von 1
- 11: schwache Feder, Einsatz 4 von Ventil 3 in die Offenstellung drückend
- 12: Gehäuse von 3
- 14: Luftreifen
- 15: Nut in der Innenseite des Gehäuses 12 auf der kavernenabgewandten Seite
- 16: Biegefeder für Schnappverschluss
16.1 nach innen weisende Schenkel von 16 (Fig. 3)
16.2 äußerer, C-förmiger Teil der Biegefeder 16 (Fig. 3)
16.3 kavernenabgewandte Stirnfläche von 16
16.4 kavernenzugewandte Stirnfläche von 16
16.5 innerer, C-förmiger Teil anderer Biegefeder 16 (Fig.4)
16.6 nach außen weisende Schenkel von 16 (Fig. 4)
- 17: Nut auf der Außenseite des Ventilschaftes 5 in der Nähe des kavernenabgewandten Endes
17.1 Stirnfläche zur Begrenzung von 17 auf kavernenzugewandter Seite
- 18: Bund am kavernenabgewandten Ende des Ventilschaftes 5
18.1 kavernenzugewandte Begrenzungsfläche des Bundes 18, gleichzeitig kavernenabgewandte Begrenzungsfläche der Nut 17, als Anschlagfläche dienend
18.2 kavernenabgewandte Begrenzungsfläche des Bundes 18, vorzugsweise kegelstumpfartig als Einführhilfe ausgebildet
- 19: Schlitz(e) durch das kavernenabgewandte Ende des Ventilschaftes 5 um eine Einfederung der Bundweite zu ermöglichen

- D: Außendurchmesser des Ventilgehäuses 12
- d: Innendurchmesser
- h: Ventilhub
- w15: Weite der Nut 15
- w16: Weite oder Dicke der Biegefeder 16
- w17: Weite der Nut 17

## Patentansprüche

1. Entlüftungsventil (3) zum Einsatz in eine Entlüftungsbohrung (2) einer Vulkanisationsform,
- wobei dieses Ventil (3) einen beweglichen Ventileinsatz (4) mit einem Schaft (5) und einen Teller (6) aufweist,
- wobei der Ventileinsatz (4) in die geschlossene Stellung drückbar ist durch Druck auf die Seite des Tellers (6), die der Kaverne der Vulkanisationsform (1), in die dieses Ventil (3) einbaubar ist, zugewandt ist,
- und umgekehrt der Ventileinsatz (4) durch eine Feder (11) in die offene Stellung bewegbar ist, wenn kein Druck von der Kaverne her auf den Teller (6) wirkt,
- wobei die Beweglichkeit des Ventileinsatzes (4) durch einen am kavernenabgewandten Ende des Ventiles angeordneten Anschlag (16 oder 18) begrenzt ist, der die Bewegung des Ventileinsatzes (4) in die Öffnungsstellung auf einen Weg kleiner 2 mm begrenzt,
**dadurch gekennzeichnet**, dass
- der Anschlag zwecks Demontierbarkeit des Ventileinsatzes (4) als ein mit Spiel ausgeführter Schnappverschluss (16 oder 18) zwischen dem Ventilschaft (5) einerseits und dem Ventilgehäuse (12) bzw. - nämlich bei gehäuseloser Anordnung des Ventileinsatzes (4) direkt im jeweiligen Segment (10) einer Vulkanisationsform (1) - dem jeweiligen Segment (10) der Vukanisationsform (1) andererseits ausgeführt ist.

2. Entlüftungsventil (3) nach Anspruch 1, dadurch gekennzeichnet, dass der Schnappverschluss (16) ein Federglied enthält, welches (16) im Ventilgehäuse (12) bzw. dem jeweiligen Segment (10) der Form (1) angeordnet ist. [siehe zum Beispiel Ausführung nach Figuren 3, 4a und 4b]

3. Entlüftungsventil (3) nach Anspruch 2, dadurch gekennzeichnet, dass das Federglied (16) direkt mit einer entsprechenden Fläche (17.1, 18.1) des Ventilschaftes (5) als Anschlag zusammenwirkt.
[siehe zum Beispiel Ausführung nach Figuren 3, 4a und 4b]

4. Entlüftungsventil (3) nach Anspruch 1, dadurch gekennzeichnet, dass das Federglied (18, 19) des Schnappverschlusses am Ventilschaft (5) angeordnet ist. [siehe zum Beispiel Ausführung nach Figur 5]

5. Entlüftungsventil (3) nach Anspruch 4, dadurch gekennzeichnet, dass das Federglied (18, 19) direkt mit einer Begrenzungsfläche am Ventilgehäuse (12) bzw. dem jeweiligen Segment (10) der Form (1) zusammenwirkt. [siehe zum Beispiel Ausführung nach Figur 5]

6. Entlüftungsventil (3) nach Anspruch 1, dadurch gekennzeichnet, dass das Federglied (16, 18, 19) als Biegefeder ausgebildet ist.

7. Entlüftungsventil (3) nach Anspruch 6 dadurch gekennzeichnet, dass in der Innenseite des Ventilgehäuses (12) bzw. - nämlich bei gehäuseloser Ausführung - in der Wandung der Entlüftungsbohrung auf der kavernenabgewandten Seite eine Nut (15) einer Weite (w15) in einer Ebene senkrecht zur Längsachse des Ventiles (12) angeordnet ist, in die die Biegefeder (16) eingelegt ist, die (16) in eine Nut (17) einer Weite (w17) auf der Außenseite des Ventilschaftes (5) eingreift, wobei zumindest eine der beiden Nutweiten (w15, w17) größer ist als die Dicke (w16) der Biegefeder (16), und zwar um so viel größer, dass das durch die Weitenverknüpfung (w17 + w15 - 2 x w16) bestimmte Spiel mindestens so groß ist wie der Ventilhub (h).

8. Entlüftungsventil (3) nach einem der Ansprüche 3 oder 5 und nach den Ansprüchen 6 und 7, dadurch gekennzeichnet, dass der Anschlag (16) als eine solche Biegefeder (16) ausgebildet ist, die in der Draufsicht im wesentlichen C-förmig gestaltet ist, wobei sich die Feder (16) an beiden Enden des C-förmigen Bereiches (16.2 in Ausführung nach Fig. 4a, 16.5 in Ausführung nach Figur 4b) in je einem nach innen weisenden Schenkel (16.1 nach Fig. 4a) oder nach außen weisenden Schenkel (16.6 nach Fig. 4b) fortsetzt und beide Schenkel (16.1 bzw. 16.6) zum Eingriff in die Nut (17) des Ventilschaftes (5) bzw. die Nut (15) des Gehäuses (12) bemessen sind.

9. Entlüftungsventil (3) nach den Ansprüchen 5 und 6 dadurch gekennzeichnet, dass der Ventilschaft (5) am kavernenabgewandten Ende einen Bund (18) aufweist, wobei die kavernenzugewandte Begrenzungsfläche (18.1) des Bundes 18, als Anschlagfläche zur Begrenzung der Ventileröffnung dient und Schlitz(e) (19) im kavernenabgewandten Ende des Ventilschaftes 5 angeordnet sind, um eine Einfederung der Bundweite zu ermöglichen, sodass durch Zusammendrücken des Bundes (18) der Ventileinsatz zur Kaverne hin herausgezogen werden kann.

10. Entlüftungsventil (3) nach Anspruch 9 dadurch gekennzeichnet, dass die kavernenzugewandte Begrenzungsfläche (18.1) des Bundes 18 kegelstumpfartig ausgebildet ist, sodass ein kräftiges Herausziehen des Ventileinsatzes (4) in Richtung der Kaverne selbsttätig das erforderliche Zusammendrücken des Bundes (18) für eine Demontage des Ventileinsatzes (4) bewirkt.

11. Entlüftungsventil (3) nach Anspruch 9 dadurch gekennzeichnet, dass die kavernenabgewandte Begrenzungsfläche (18.2) des Bundes 18 kegelstumpfartig ausgebildet ist, sodass ein kräftiges Hereindrücken des Ventileinsatzes (4) in die innenkegelige Fläche (9) des Gehäuses (12) bzw. des Segmentes (10) selbsttätig das erforderliche Zusammendrücken des Bundes (18) für eine Montage des Ventileinsatzes (4) bewirkt.

12. Entlüftungsventil (3) nach Anspruch 9 dadurch gekennzeichnet, dass der Bund (18) in der Stirnansicht unrund ist in solcher Weise, dass sein Durchmesser (E) in schlitzfernen Umfangsbereichen größer ist als sein Durchmesser (e) in Schlitznähe.

13. Entlüftungsventil (3) nach einem der vorangehenden Ansprüche, dadurch gekennzeichnet, dass die Feder (11), die den Ventileinsatz (4) in die offene Stellung bewegt, wenn nichts von der Kaverne her auf den Ventilteller drückt, eine Drahtwendelfeder (11) [engl.: coiled wire spring; frz.: ressort helicoide en fil metallique] ist, die konzentrisch um den Schaft (5) des Ventiles (3) herum angeordnet ist.

14. Entlüftungsventil (3) nach einem der vorangehenden Ansprüche, vorzugsweise nach Anspruch 13, dadurch gekennzeichnet, dass die Feder (11), die den Ventileinsatz (4) in die offene Stellung bewegt, wenn nichts von der Kaverne her auf den Ventilteller drückt, sich kavernenseitig bis zum Teller (6) des Ventiles (3) erstreckt, wobei die Feder (11) in der Schließstellung des Ventiles komprimiert ist.

15. Entlüftungsventil nach einem der vorangehenden Ansprüche dadurch gekennzeichnet,
- dass jedes im Laufflächenbereich angeordnete Ventil (3) ein eigenes, vorzugsweise zylinderförmiges, Gehäuse (12) aufweist, gegenüber dem alle beweglichen Bauteile (4, 11) des Ventiles (3) unverlierbar gehalten sind und,
- dass das Ventilgehäuse (12) einen Außendurchmesser (D) zwischen 2 und 4,5 mm in Formen zur Herstellung von PKW-Reifen und 3 bis 6 mm in Formen zur Herstellung für schwere LKW-Reifen aufweist.

16. Vulkanisationsform (1) für die Herstellung von Reifen (14) mit einer Vielzahl von in dem die Lauffläche des zu vulkanisierenden Reifens prägenden Formenbereich angeordneten Entlüftungsbohrungen (2), die Ventile (3) gemäß einem der vorangehenden Ansprüche enthalten.

## Claims

1. Venting valve (3) for use in a venting bore (2) of a vulcanisation mould,
• this valve (3) having a movable valve core (4) with a stem (5) and a head (6),
• the valve core (4) being able to be pushed into the closed position by pressure on the side of the head (6), which side faces towards the cavity of the vulcanisation mould (1) into which this valve (3) can be fitted,
• and conversely the valve core (4) being movable into the open position by means of a spring (11) if no pressure from the cavity acts upon the head (6),
• the mobility of the valve core (4) being delimited by a stop member (16 or 18) which is disposed on the end of the valve which faces away from the cavity, said stop member delimiting the movement of the valve core (4) into the open position on a path which is smaller than 2 mm,
*characterised in that*
• the stop member is configured, for the purpose of dismounting the valve core (4), as a snap (16 or 18), which is configured with clearance, between the valve stem (5), on the one hand, and the valve housing (12), on the other hand, alternatively - namely in the case of a housing-free arrangement of the valve core (4) directly in the respective segment (10) of a vulcanisation mould (1) - in the respective segment (10) of the vulcanisation mould (1).

2. Venting valve (3) according to claim 1, characterised in that the snap (16) contains a spring member, which is disposed in the valve housing (12), alternatively in the respective segment (10) of the mould (1).
(see for example the embodiment according to Figures 3, 4a and 4b).

3. Venting valve (3) according to claim 2, characterised in that the spring member (16) co-operates directly with a corresponding face (17.1, 18.1) of the valve stem (5) as a stop member.
(see for example the embodiment according to Figures 3, 4a and 4b)

4. Venting valve (3) according to claim 1, characterised in that the spring member (18, 19) of the snap is disposed on the valve stem (5).
(see for example the embodiment according to Figure 5)

5. Venting valve (3) according to claim 4, characterised in that the spring member (18, 19) co-operates directly with a boundary surface on the valve housing (12), alternatively the respective segment (10) of the mould (1).
(see for example the embodiment according to Figure 5)

6. Venting valve (3) according to claim 1, characterised in that the spring member (16, 18, 19) is configured as a bending spring.

7. Venting valve (3) according to claim 6, characterised in that, in the inside of the valve housing (12), alternatively - namely in the case of a housing-free embodiment - in the wall of the venting bore on the side which faces away from the cavity, there is disposed a groove (15) of a width (w15) in a plane which is perpendicular to the longitudinal axis of the valve (12), into which groove the bending spring (16) is inserted, which spring (16) engages in a groove (17) of a width (w17) on the outside of the valve stem (5), at least one of the two groove widths (w15, w17) being greater than the thickness (w16) of the bending spring (16), and indeed greater to such an extent that the clearance determined by the width combination (w17 + w15 - 2x w16) is at least as great as the valve lift (h).

8. Venting valve (3) according to one of the claims 3 or 5 and according to claims 6 and 7, characterised in that the stop member (16) is configured as a bending spring (16) such as is formed in plan view substantially C-shaped, the spring (16) continuing respectively, at both ends of the C-shaped region (16.2 in the embodiment according to Figure 4a, 16.5 in the embodiment according to Figure 4b), in one inwardly orientated portion (16.1 according to Figure 4a) or outwardly orientated portion (16.6 according to Figure 4b) and both portions (16.1 or 16.6) being dimensioned to engage in the groove (17) of the valve stem (5) or the groove (15) of the housing (12).

9. Venting valve (3) according to claims 5 and 6, characterised in that the valve stem (5) has a collar (18) on the end which faces away from the cavity, the boundary surface (18.1) of the collar (18), which boundary surface faces towards the cavity, serves as a stop face for delimiting the opening of the valve and a groove or grooves (19) is/are disposed in the end of the valve stem (5) which faces away from the cavity in order to make possible a spring deflection of the collar width so that, by compressing the collar (18), the valve core can be extracted in the direction of the cavity.

10. Venting valve (3) according to claim 9, characterised in that the boundary surface (18.1) of the collar (18), which surface faces towards the cavity, has a truncated configuration, so that a forceful extraction of the valve core (4) in the direction of the cavity automatically effects the compression of the collar (18) for dismounting of the valve core (4).

11. Venting valve (3) according to claim 9, characterised in that the boundary surface (18.2) of the collar (18), which surface faces away from the cavity, has a truncated configuration so that a forceful pressing-in of the valve core (4) into the interior conical face (9) of the housing (12) or the segment (10) automatically effects the required compression of the collar (18) for mounting of the valve core (4).

12. Venting valve (3) according to claim 9, characterised in that the collar (18) is not round in front view in such a manner that its diameter (E) in the peripheral regions far-away from the groove is greater than its diameter (e) close to the groove.

13. Venting valve (3) according to one of the preceding claims, characterised in that the spring (11), which moves the valve core (4) into the open position, if nothing presses on the valve head from the direction of the cavity, is a coiled wire spring (11), which is disposed concentrically about the stem (5) of the valve (3).

14. Venting valve (3) according to one of the preceding claims, preferably according to claim 13, characterised in that the spring (11), which moves the valve core (4) into the open position, if nothing presses on the valve head from the direction of the cavity, extends on the cavity-side up to the head (6) of the valve (3), the spring (11) being compressed in the closed position of the valve.

15. Venting valve (3) according to one of the preceding claims, characterised in that
• each valve (3) disposed in the tread region has its own, preferably cylindrical housing (12), relative to which all of the movable components (4, 11) of the valve (3) are held captively and,
• the valve housing (12) has an external diameter (D) between 2 and 4.5 mm in moulds for producing tyres for automotive vehicles and 3 to 6 mm in moulds for producing heavy tyres for lorries.

16. Vulcanisation mould (1) for the production of tyres (14) having a multiplicity of venting bores (2), which are disposed in the mould region which impresses the tread of the tyre to be vulcanised, said bores containing the valves (3) according to one of the preceding claims.

## Revendications

1. Soupape de purge d'air (3) pour insertion dans un perçage de purge d'air (2) d'un moule de vulcanisation,
- dans le cas de laquelle cette soupape (3) présente un obturateur mobile (4) avec une tige (5) et une tête (6),
- dans le cas de laquelle l'obturateur (4) peut être repoussé dans la position fermée par une pression qui s'exerce sur la face de la tête (6) située du côté de la caverne du moule de vulcanisation (1) dans laquelle cette soupape (3) peut se placer,
- et inversement l'obturateur (4) peut venir dans la position ouverte, sous l'action d'un ressort (11), lorsqu'aucune pression provenant de la caverne ne s'exerce sur la tête (6),
- dans le cas de laquelle la mobilité de l'obturateur (4) est limitée par une butée (16 ou 18) qui est disposée à l'extrémité de la soupape opposée à la caverne et qui limite à une course inférieure à 2 mm le mouvement de l'obturateur (4) dans la position d'ouverture,
caractérisée par le fait
- que, pour que l'obturateur (4) puisse se démonter, la butée est réalisée sous forme d'un verrou à déformation élastique (16 ou 18), exécuté avec jeu, entre la tige de soupape (5) d'une part et le corps de soupape (12) ou - c'est-à-dire dans le cas d'une disposition de l'obturateur (4), en l'absence de corps de soupape, directement dans le segment respectif (10) d'un moule de vulcanisation (1) - le segment respectif (10) du moule de vulcanisation (1) d'autre part.

2. Soupape de purge d'air (3) selon la revendication 1, caractérisée par le fait que le verrou à déformation élastique (16) contient un élément élastique (16) qui est disposé dans le corps (12) de soupape ou dans le segment respectif (10) du moule (1) [voir par exemple réalisation selon les figures 3, 4a et 4b].

3. Soupape de purge d'air (3) selon la revendication 2, caractérisée par le fait que l'élément élastique (16) collabore directement avec une surface correspondante (17.1, 18.1) de l'obturateur (5) servant de butée [voir par exemple réalisation selon les figures 3, 4a et 4b].

4. Soupape de purge d'air (3) selon la revendication 1, caractérisée par le fait que l'élément élastique (18, 19) du verrou à déformation élastique est disposé sur la tige de soupape (5) [voir par exemple réalisation selon la figure 5].

5. Soupape de purge d'air (3) selon la revendication 4, caractérisée par le fait que l'élément élastique (18, 19) collabore directement avec une surface de limitation prévue sur le corps (12) de soupape ou sur le segment respectif (10) du moule (1) [voir par exemple réalisation selon la figure 5].

6. Soupape de purge d'air (3) selon la revendication 1, caractérisée par le fait que l'élément élastique (16, 18, 19) est conçu sous forme de ressort de flexion.

7. Soupape de purge d'air (3) selon la revendication 6 caractérisée par le fait que dans la face intérieure du corps (12) de soupape ou - c'est-à-dire dans le cas d'une réalisation sans corps de soupape - dans la paroi du perçage de purge d'air, du côté opposé à la caverne, est disposée dans un plan perpendiculaire à l'axe longitudinal de la soupape (12), une rainure (15) de largeur (w15) dans laquelle se place le ressort de flexion (16) qui pénètre également dans une rainure (17) de largeur (w17) prévue sur la face extérieure de l'obturateur (5), étant précisé qu'au moins l'une des deux largeurs (w15, w17) de rainure est plus grande que l'épaisseur (w16) du ressort de flexion (16), et de façon plus précise d'autant plus grande que le jeu déterminé par la combinaison de largeurs (w17 + w15 - 2 x w16) est au moins aussi grand que la course (h) de la soupape.

8. Soupape de purge d'air (3) selon l'une des revendications 3 ou 5 et selon les revendications 6 et 7, caractérisée par le fait que la butée (6) est conçue sous forme d'un tel ressort de flexion (16) qui, en vue de dessus a sensiblement la forme d'un C, étant précisé qu'aux deux extrémités de la zone en forme de C (16.2 dans la réalisation selon figure 4a, 16.5 dans la réalisation selon figure 4b), le ressort (16) se prolonge chaque fois en une branche orientée vers l'intérieur (16.1 selon figure 4a) ou orientée vers l'extérieur (16.6 selon figure 4b) et que les deux branches (16.1 ou 16.6) sont dimensionnées pour pénétrer dans la rainure (17) de la tige de soupape (5) ou dans la rainure (15) du corps de soupape (12).

9. Soupape de purge d'air (3) selon les revendications 5 et 6 caractérisée par le fait qu'à l'extrémité opposée à la caverne, la tige de soupape (5) présente un collet (18), la surface de limitation (18.1) du collet (18) située du côté caverne servant de surface de butée pour limiter l'ouverture de la soupape et une (des) fente (s) (19) étant disposée (s) à l'extrémité de la tige de soupape (5) opposée à la caverne pour permettre une diminution élastique de la largeur du collet de sorte qu'en comprimant le collet (18) on peut extraire l'obturateur en direction de la caverne.

10. Soupape de purge d'air (3) selon la revendication 9 caractérisée par le fait que la surface de limitation (18.1) du collet (18) située du côté caverne a la forme d'un tronc de cône de sorte que le fait de tirer fortement l'obturateur (4) en direction de la caverne opère automatiquement la compression du collet (18) nécessaire pour un démontage de l'obturateur (4).

11. Soupape de purge d'air (3) selon la revendication 9, caractérisée par le fait que la surface de limitation (18.2) du collet (18) opposée à la caverne a la forme d'un tronc de cône de sorte que le fait de pousser fortement l'obturateur (4) dans la surface en cône intérieur (9) du corps (12) ou du segment (10) opère automatiquement la compression du collet (18) nécessaire pour un montage de l'obturateur (4).

12. Soupape de purge d'air (3) selon la revendication 9 caractérisée par le fait qu'en vue frontale le collet (18) est non rond de façon telle que son diamètre (E) dans les zones périphériques éloignées de la fente est supérieur à son diamètre (e) au voisinage de la fente.

13. Soupape de purge d'air (3) selon l'une des revendications précédentes, caractérisée par le fait que le ressort (11) qui amène l'obturateur (4) en position ouverte lorsque rien ne pousse, de la caverne, sur la tête de soupape, est un ressort hélicoïde en fil métallique (11) [anglais: coiled wire spring ; français: ressort hélicoïde en fil métallique] qui est disposé concentriquement autour de la tige (5) de la soupape (3).

14. Soupape de purge d'air (3) selon l'une des revendications précédentes, en particulier selon la revendication 13, caractérisée par le fait que le ressort (11), qui amène l'obturateur (4) dans la position ouverte lorsque rien ne pousse, de la caverne, sur la tête de soupape, s'étend, côté caverne, jusqu'à la tête (6) de la soupape (3), le ressort (11) étant comprimé dans la position de fermeture de la soupape.

15. Soupape de purge d'air selon l'une des revendications précédentes, caractérisée par le fait
- que chaque soupape (3) disposée dans la zone de la bande de roulement présente un corps propre, de préférence cylindrique, (12), par rapport auquel tous les composants mobiles (4, 11) de la soupape (3) sont maintenus de façon imperdable et
- que le corps (12) de la soupape présente un diamètre extérieur (D) valant entre 2 et 4,5 mm dans des moules pour fabrication de pneumatique de véhicules de tourisme et valant de 3 à 6 mm dans des moules pour fabrication de pneumatiques lourds pour camions.

16. Moule de vulcanisation (1) pour la fabrication de pneumatique (14), présentant une pluralité de perçages de purge d'air (2) qui sont disposés dans la zone du moule de matriçage de la bande de roulement du pneumatique à vulcaniser et qui contiennent des soupapes (3) conformes à l'une des revendications précédentes.
